# EUROPEAN PATENT APPLICATION

(11) **EP 1 763 176 A1**
(43) Date of publication of application: **14.03.2007**
(21) Application number: 06017394.5
(22) Date of filing: 22.08.2006
(51) Int. Cl.: H04L 12/28

(54) **Packet flow control in a wireless local area network**

(30) Priority: 12.09.2005 KR 20050084821
(71) Applicant: Samsung Electronics Co., Ltd., Suwon-si, Gyeonggi-Do (KR)
(72) Inventor: Chung, Soo-Jin, Gunpo-si Gyeonggi-do (KR); Kim, Ki-ll-Yeon, Yeongtong-gu Suwon-si Gyeonggi-do (KR)
(74) Representative: Lang, Johannes

(57) **Abstract**

Packet flow control in a Wireless Local Area Network (WLAN) system includes controlling packet flow of the WLAN using a pause frame depending on whether a buffer of an (Access Point) AP is saturated, thereby preventing packet loss and channel dissipation and improving the efficiency with which resources of the WLAN are utilized.

## Description

### BACKGROUND OF THE INVENTION

### Field of the Invention

The present invention relates to a packet flow control method and apparatus in a Wireless Local Area Network (WLAN).

### Description of the Related Art

Interest and expectations regarding Wireless Local Area Networks (WLANs) have been increasing due to users' strong desire to pursue mobility and convenient data service.

WLANs currently in wide use include Bluetooth, Home Radio Frequency (HomeRF), OpenAir, and High Performance Radio LAN (HIPERLAN).

Standards related to WLANs include IEEE 802.11 standards, HIPERLAN standards defined by the Committee on Broadband Radio Access Networks (BRAN) project of the European Telecommunications Standards Institute (ETSI), and Multimedia Mobile Access Communication Systems-Promotion Council (MAC-PC) standards in Japan.

Of these, the IEEE standards are classified into IEEE 802.11 which does not require any approval for use, IEEE 802.11b in which existing modulation/demodulation technology is modified in part, and IEEE 802.11a which outlines the use of Orthogonal Frequency Division Multiplexing (OFDM).

The HIPERLAN standards include HIPERLAN type 1 and HIPERLAN type 2. HIPERLAN type 1 employs the WLAN of IEEE 802.11 and Carrier Sense Multiple Access with Collision Avoidance (CSMA/CA) for Media Access Control (MAC), and HIPERLAN type 2 utilizes Asynchronous Transfer Mode (ATM) technology and uses an emulation mode.

In such a WLAN, Bluetooth provides a transmission rate of about 1Mbps, and HomeRF provides a transmission rate of about 2Mbps. IEEE 802.11 provides a transmission rate of maximum 2Mbps at a bandwidth of 2.5GHz, IEEE 802.11b provides a transmission rate of 11Mbps, and IEEE 802.11a provides a transmission rate of up to 54Mbps at a bandwidth of 5GHz. In the case of HIPERLAN, HIPERLAN type 1 provides a transmission rate of 19Mbps, and HIPERLAN type 2 provides a transmission rate averaging 25Mbps with a maximum of 54Mbps.

IEEE 802.11n is a new WLAN standard which is currently in the process of standardization. It provides a maximum transmission rate of 320Mbps, which is faster than the transmission rate of a wired LAN (10Mbps/100Mbps).

In such a WLAN, WLAN terminals communicate with an external network through an Access Point (AP) in an environment such as an office, a commercial district, or a home. Because a region covered by a wave transmission of the WLAN terminal is so small that a hidden node problem occurs, the WLAN terminals communicate with the external network through the AP which has wide coverage. The AP receives a packet from a WLAN terminal within its coverage area, analyzes information in the packet, and transmits the packet to an internal network within its coverage or an external network. The external network may be a wireless network or a wired network.

In the WLAN, two or more WLAN terminals share a public network of same frequency band, so it is impossible to use a full-duplex method in the public network. That is, the WLAN is a half-duplex network in which two WLAN terminals cannot use the same channel (public network) at the same time.

For the foregoing reason, in order to transmit a packet to a destination, a WLAN terminal first checks whether or not a channel is available before transmitting a Request to Send (RTS) frame request to occupy the channel to the AP. The AP receives the RTS frame and transmits a Clear to Send (CTS) frame allowing the WLAN terminal to occupy the channel. When the RTS frame or the CTS frame is a value indicating a channel-occupying time period, the other WLAN terminals which have access to the same AP cannot use the channel during the designated time period.

In the WLAN having a transmission rate and communication method as described above, the WLAN terminal is part of an internal network which has a slower transmission rate than an external network.

Thus, in the existing WLAN, the AP transmits the packet of the internal network to the external network without any restriction. That is, the existing WLAN does not consider a packet flow control problem resulting from a transmission rate difference between the internal network and the external network.

However, as WLAN technology develops, a case can occur in which media whose supported transmission rate is slow is connected to the external network when the supported transmission rate of the WLAN terminal of the internal network is much faster, as in IEEE 802.11n. In this case, the AP does not consider the transmission rate difference between the internal network and the external network, and thus the packets to be transmitted to the external network accumulate at the AP. In addition, the AP may discard the accumulated packets because of a lack of an internal buffer capacity.

In a packet flow control method of an AP, the AP receives a packet from the WLAN terminal in the internal network.

The AP then determines whether the buffer space is insufficient.

When the buffer space is not insufficient, the AP stores the received packet in the buffer.

The AP then analyzes the packet stored in the buffer and transmits the packet to the internal network or the external network.

When the buffer space is insufficient, the AP discards the received packet.

Even though the AP discards the received packet, the WLAN terminal does not know the status of the AP, and so it is impossible to know exactly whether the destination of the packet is in the internal network or the external network. Accordingly, since the WLAN terminal transmits a packet which cannot be handled by the AP, even a packet to be transmitted from another WLAN terminal to the internal network, i.e., a packet which can be processed by the AP, cannot use the channel.

### SUMMARY OF THE INVENTION

It is, therefore, an object of the present invention to provide a packet flow control method and apparatus in a Wireless Local Area Network (WLAN) in which channel dissipation and packet loss can be reduced.

One aspect of the present invention is to provide an Access Point (AP) to control packet flow in a WLAN, including: a controller adapted to adapted to receive a packet from a WLAN terminal constituting an internal network, to determine whether a buffer is saturated upon a packet being received from a WLAN terminal, and to transmit a pause frame to the WLAN terminal upon the buffer being saturated.

The pause frame preferably includes information to request packet transmission to be paused and a pause time indicating a packet transmission pause time period.

The controller is preferably adapted to transmit the pause frame and to discard the received packet.

The controller is preferably adapted to store the received packet in the buffer upon the buffer not being saturated, to determine whether the buffer is more than a prescribed percentage full, and to transmit the pause frame to the WLAN terminal upon the buffer being more than the prescribed percentage full.

The controller is preferably adapted to analyze a destination address of a packet received from the WLAN terminal upon an external network having a slower transmission rate than the internal network, to transmit the packet to the internal network upon the destination address of the packet being in the internal network, and to determine whether the buffer is saturated upon the destination address of the packet being in the external network.

Another aspect of the present invention is to provide a Wireless Local Area Network (WLAN) terminal to control packet flow in a WLAN system, the WLAN including: a controller adapted to receive a pause frame containing a pause time from an Access Point (AP), to analyze the pause frame to count to the pause time, to pause packet transmission to the AP during the count to the pause time, and to recommence the packet transmission to the AP upon the count to the pause time being finished.

The pause frame preferably includes information to request packet transmission to be paused.

The WLAN terminal preferably further includes a storage unit adapted to store information contained in the pause frame.

The controller is preferably adapted to transmit a packet, whose destination is in an internal network, to the AP during the count to the pause time, to pause transmission of the packet upon the pause frame being received from the AP during transmission of the packet, and to continue transmitting the packet upon the pause frame not being received.

Still another aspect of the present invention is to provide a Wireless Local Area Network (WLAN) system to control packet flow, the WLAN including: an Access Point (AP) adapted to determine whether a buffer is saturated upon a packet being received from an internal network and to transmit a pause frame containing a pause time to the internal network upon the buffer being saturated; and a WLAN terminal adapted to exchange packets with the AP, to receive the pause frame from the AP to analyze the pause frame and count to the pause time, to pause packet transmission to the AP during the count to the pause time, and to recommence the packet transmission to the AP upon the count to the pause time being finished.

The pause frame preferably includes information to request packet transmission to be paused. The pause frame preferably further includes a destination address to which the WLAN terminal is to transmit the packet.

The AP is preferably adapted to transmit the pause frame and to discard the received packet. The AP is preferably adapted to store the received packet in the buffer upon the buffer not being saturated, to determine whether the buffer is more than a prescribed percentage full, and to transmit the pause frame to the internal network upon the buffer being more than the prescribed percentage full. The AP is preferably adapted to analyze a destination address of a packet received from the WLAN terminal upon an external network having a slower transmission rate than the internal network, to transmit the packet to the internal network upon the destination address of the packet being in the internal network, and to determine whether the buffer is saturated upon the destination address of the packet being in the external network.

The WLAN terminal is preferably adapted to transmit a packet, whose destination is in an internal network, to the AP during the count to the pause time, to pause transmission of the packet upon the pause frame being received from the AP during transmission of the packet, and to continue transmitting the packet upon the pause frame not being received.

Yet another aspect of the present invention is to provide a packet flow control method of an Access Point (AP) in a Wireless Local Area Network (WLAN), the method including: determining whether a buffer is saturated upon a packet being received from a WLAN terminal; transmitting a pause frame to the WLAN terminal and discarding the received packet upon the buffer being saturated; and storing the received packet in the buffer upon the buffer not being saturated.

The pause frame preferably includes information to request that packet transmission to be paused and a pause time to indicate a packet transmission pause time period.

The method preferably further includes determining whether the buffer is more than a prescribed percentage full upon the packet being stored in the buffer, and transmitting the pause frame to the WLAN terminal upon the buffer being more than the prescribed percentage full.

The method preferably further includes analyzing a destination address of a packet received from the WLAN terminal upon an external network having a slower transmission rate than an internal network, transmitting the packet to the internal network upon the destination address of the packet being in the internal network, and determining whether the buffer is saturated upon the destination address of the packet being in the external network.

Yet still another aspect of the present invention is to provide a packet flow control method of a Wireless Local Area Network (WLAN) terminal in a WLAN system, the method including: receiving a pause frame containing a pause time from an Access Point (AP); analyzing the pause frame to count to the pause time; and transmitting the packet to the AP upon the count to the pause time being finished.

The pause frame preferably includes information to request that packet transmission be paused.

The method preferably further includes transmitting a packet, whose destination is in an internal network, to the AP during the count to the pause time, pausing transmission of the packet upon the pause frame being received from the AP during transmission of the packet, and continuing to transmit the packet upon the pause frame not being received.

### BRIEF DESCRIPTION OF THE DRAWINGS

A more complete appreciation of the present invention and many of the attendant advantages thereof, will be readily apparent as the present invention becomes better understood by reference to the following detailed description when considered in conjunction with the accompanying drawings in which like reference symbols indicate the same or similar components, wherein:
FIG. 1 is a flowchart of a packet flow control method of an Access Point (AP);
FIG. 2 is a schematic diagram of a Wireless Local Area Network (WLAN) system according to an exemplary embodiment of the present invention;
FIG. 3 is a block diagram of an AP of a WLAN system according to an exemplary embodiment of the present invention;
FIG. 4 is a view of a structure of a pause frame produced by an AP of a WLAN system according to an exemplary embodiment of the present invention;
FIG. 5 is a block diagram of a WLAN terminal of a WLAN system according to an exemplary embodiment of the present invention;
FIG. 6 is a flowchart of a packet flow control method of an AP according to an exemplary embodiment of the present invention; and
FIG. 7 is a flowchart of a packet flow control method of a WLAN terminal according to an exemplary embodiment of the present invention.

### DETAILED DESCRIPTION OF THE INVENTION

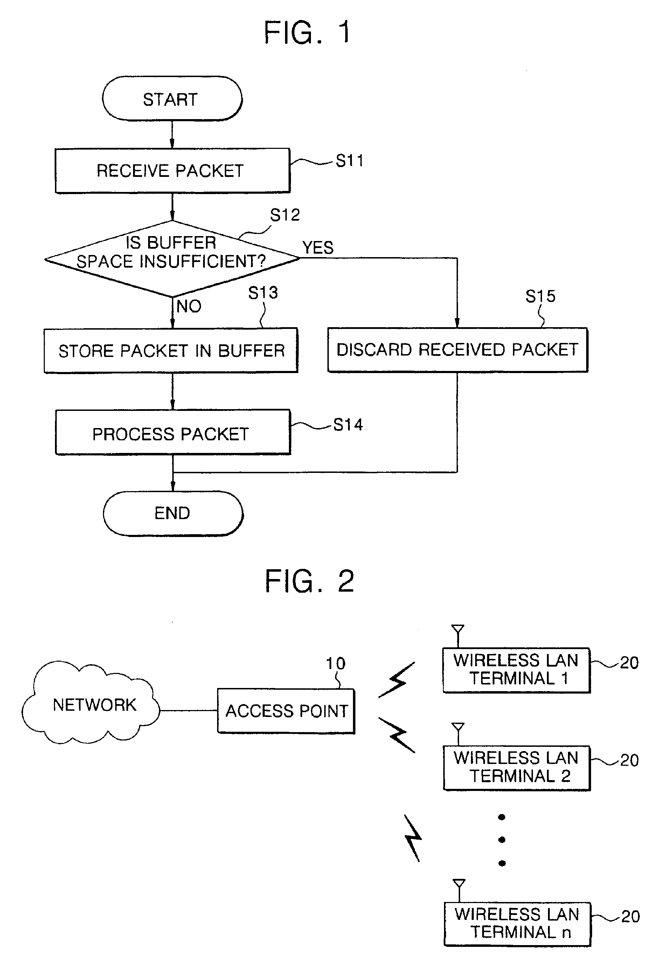

FIG. 1 is a flowchart of a packet flow control method of an Access Point (AP). As shown in FIG. 1, the AP receives a packet from the Wireless Local Area Network (WLAN) terminal in the internal network (S11).

The AP then determines whether the buffer space is insufficient (S12).

When the buffer space is not insufficient, the AP stores the received packet in the buffer (S13).

The AP then analyzes the packet stored in the buffer and transmits the packet to the internal network or the external network (S 14).

When the buffer space is insufficient, the AP discards the received packet (S15).

Even though the AP discards the received packet, the WLAN terminal does not know the status of the AP, and so it is impossible to know exactly whether the destination of the packet is in the internal network or the external network. Accordingly, since the WLAN terminal transmits a packet which cannot be handled by the AP, even a packet to be transmitted from another WLAN terminal to the internal network, i.e., a packet which can be processed by the AP, cannot use the channel.

Hereinafter, exemplary embodiments of the present invention are described in detail with reference to the accompanying drawings. In the following description, a detailed description of known functions and configurations incorporated herein has been omitted for conciseness.

FIG. 2 is a schematic diagram of a WLAN system according to an exemplary embodiment of the present invention.

As shown in FIG. 2, the WLAN system includes an AP 10 and WLAN terminals 20.

The WLAN terminals 20 are connected to an external network through the AP 10. A network constituted by the WLAN terminals 20 which perform WLAN communication is referred to as an internal network.

Since the performance of one AP 10 in connecting the internal network to the external network is limited, the WLAN terminals 20 in the internal network can be connected to a plurality of APs 10.

The AP 10 receives and stores packets from the WLAN terminals 20, and analyzes and transmits the stored packets to the internal network or the external network, i.e., wireless network. The AP 10 transmits a pause frame to the WLAN terminal 20 when the buffer is completely full, i.e., saturated.

The pause frame includes information for requesting packet transmission to be paused and a predetermined pause time indicating a packet transmission pause time period.

The WLAN terminal 20 transmits/receives a packet to/from the AP 10 and receives the pause frame from the AP 10. The WLAN terminal 20 analyzes the received pause frame and counts to a prescribed pause time contained in the pause frame.

A packet flow control operation of the WLAN system having such a configuration is described below in detail.

The AP 10 receives the packet from the WLAN terminal and determines whether the buffer is completely full. When the AP 10 is saturated, the AP 10 transmits the pause frame containing the pause time to thereby request packet transmission to be paused during the pause time.

In the WLAN system in which the external network has a slower transmission rate than the internal network, the AP 10 analyzes the received packet to determine whether the destination of the received packet is in the internal network, even though the buffer is completely full, the AP 10 does not discard the packet but transmits it to the destination in the internal network.

The WLAN terminal 20 receives and analyzes the pause time from the AP 10 and counts to the pause time contained in the pause frame. The WLAN terminal 20 does not transmit the packet to the AP 10 during the count to the pause time, but transmits the packet to the AP 10 when the count to the pause time is finished.

However, the WLAN terminal. 20 can transmit the packet to the AP 10 during the count to the pause time when the destination of the packet is in the internal network. When the pause frame is received from the AP 10 after the packet whose destination is in the internal network is transmitted, the WLAN terminal 20 transmits all packets after the count to the pause time is finished.
As described above, the WLAN system of the present invention can prevent channel dissipation and packet loss by sending the pause frame depending on whether the buffer of the AP 10 is saturated.

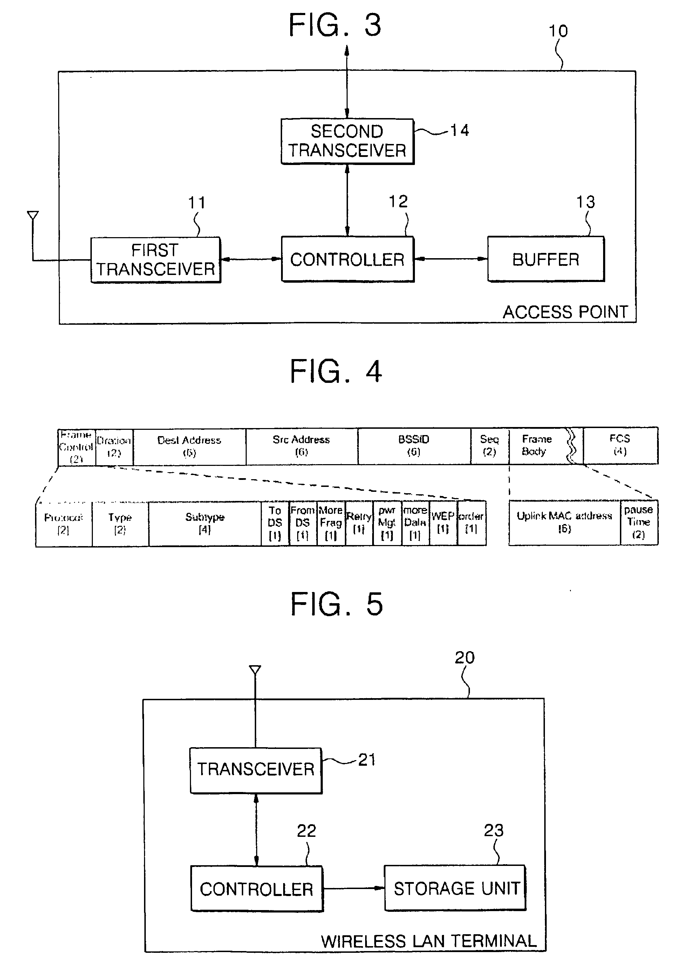

FIG. 3 is a block diagram of an AP of a WLAN system according to an exemplary embodiment of the present invention.

As shown in FIG. 3, the AP 10 includes a first transceiver 11, a controller 12, a buffer 13, and a second transceiver 14.

The first transceiver 11 transmits/receives radio data to/from the WLAN terminal 20.

The controller 12 analyzes and processes the packet received from the WLAN terminal 20 through the first transceiver 11. The controller 12 determines whether the buffer 13 is more than a predetermined percentage full to transmit the pause frame to the WLAN terminal 20.

The buffer 13 temporarily stores the packet received from the WLAN terminal 20 to be processed by the controller 12.

The external interface, i.e., the second transceiver 14, performs wireless or wired data communication with the external network.

A packet flow control operation of the AP 10 having such a configuration is described below in detail.

The first transceiver 11 receives the packet from the WLAN terminal 20 and outputs the received packet to the controller 12.

The controller 12 receives the packet from the first transceiver 11 to check whether the buffer 13 is completely full. When the buffer 13 is determined to be not saturated, the controller 12 stores the received packet in the buffer 13.

However, when the buffer 13 is determined to be saturated, the controller 12 transmits the pause frame for requesting the WLAN terminal 20 through the first transceiver 11 that packet transmission be paused during the prescribed pause time period. The pause frame includes information for requesting that packet transmission be paused and a predetermined pause time indicating a packet transmission pause time period. The pause frame can further comprise a destination MAC address to which the WLAN terminal 20 desires to transmit the packet.

The controller 12 can discard the received packet when transmitting the pause frame to the WLAN terminal 20.

When the controller 12 stores the received packet in the buffer 13 because the buffer 13 is not saturated, the stored packets are sequentially transmitted to the internal network or the external network in stored order by the first transceiver 11 or the second transceiver 14.

Before transmitting the packet stored in the buffer 13 to the wireless network, the controller 12 can determine whether the buffer 13 is more than a prescribed percentage full. When the buffer 13 is determined to be more than the prescribed percentage full, the controller 12 transmits the pause frame to the WLAN terminal 20 through the first transceiver 11.

Then, the controller 12 transmits the packet stored in the buffer 13 to the internal or external network, i.e., wireless network.

In the AP 10 which performs the above described operation, the controller 12 can check a transmission rate of the internal network and the external network.

When the external network has a slower transmission rate than the internal network, the controller 12 does not transmit the pause frame for all received packets but transmits the pause frame only for packets whose destination is in the external network, even when the buffer 13 is completely full.

Thus, when a packet whose destination is in the internal network is received, the controller 12 does not transmit the pause frame to the WLAN terminal 20 during transmission of the packet to the internal network.

That is, when the external network has a slower transmission rate than the internal network, the AP 10 transmits the pause frame only for packets whose destination is in the external network, thereby preventing channel dissipation of the internal network.

As described above, the AP 10 controls packet flow of the internal network by sending the pause frame depending on whether the buffer 13 is saturated, thereby preventing packet loss and channel dissipation.

FIG. 4 is a view of a structure of the pause frame produced by the AP of the WLAN system according to an exemplary embodiment of the present invention.

In FIG. 4, parentheses denote bytes and square brackets denote bits.

The pause frame follows a management frame, a type of frame of the WLAN.

As shown in FIG. 4, a type representing the pause frame is indicated in Subtype of Frame Control.

In the pause frame of FIG. 4, an address of the WLAN terminal 20 for receiving the pause frame or an address for representing all WLAN terminals 20 in the internal network connected to the AP 10 can be recorded in a destination address Dest Address.

In the pause frame, a destination MAC address Uplink MAC address recorded in the packet initially transmitted from the WLAN terminal 20 and the pause time of the WLAN terminal 20 are recorded in Frame Body.

FIG. 5 is a block diagram of a WLAN terminal of a WLAN system according to an exemplary embodiment of the present invention.

As shown in FIG. 5, the WLAN terminal 20 includes a transceiver 21, a controller 22, and a storage unit 23.

The transceiver 21 of the WLAN terminal 20 performs wireless data communication with the AP 10 and other WLAN terminals 20 which constitute an internal network.

The controller 22 controls an overall operation of the WLAN terminal 20 and generates a packet for transmitting to the internal or external network.

The storage unit 23 stores an address of the WLAN terminal and destination MAC addresses of destinations connected to the wireless network.

A packet flow control operation of the WLAN terminal 20 having such a configuration is described below in detail.

The transceiver 21 transmits the packet to the AP 10 and receives a pause frame from the AP 10. The transceiver 21 receives the pause frame and outputs it to the controller 22.

Then, the controller 22 analyzes the pause frame and stores a destination MAC address and a pause time which are contained in the pause frame in the storage unit 23. When the destination MAC address is stored in the storage unit 23, the controller 22 determines whether it is the destination MAC address which is already stored in the storage unit 23 and stores only destination MAC addresses which are not already stored in the storage unit 23.

After storing the pause time in the storage unit 23, the controller 22 counts to the stored pause time. The controller 22 pauses packet transmission during the count operation and recommences packet transmission to the AP 10 through the transceiver 21 when the count is finished.

The controller 22 can transmit a packet whose destination is in the internal network to the AP 10 even during the count to the pause time. The controller 22 can continually transmit packets whose destination is in the internal network during the count to the pause time unless it receives the pause frame for packets whose destination is in the internal network, which is transmitted during the count to the pause time.

The controller 22 pauses packet transmission during the count to the pause time when the pause frame is received from the AP 10, even after transmitting a packet whose destination is in the internal network.

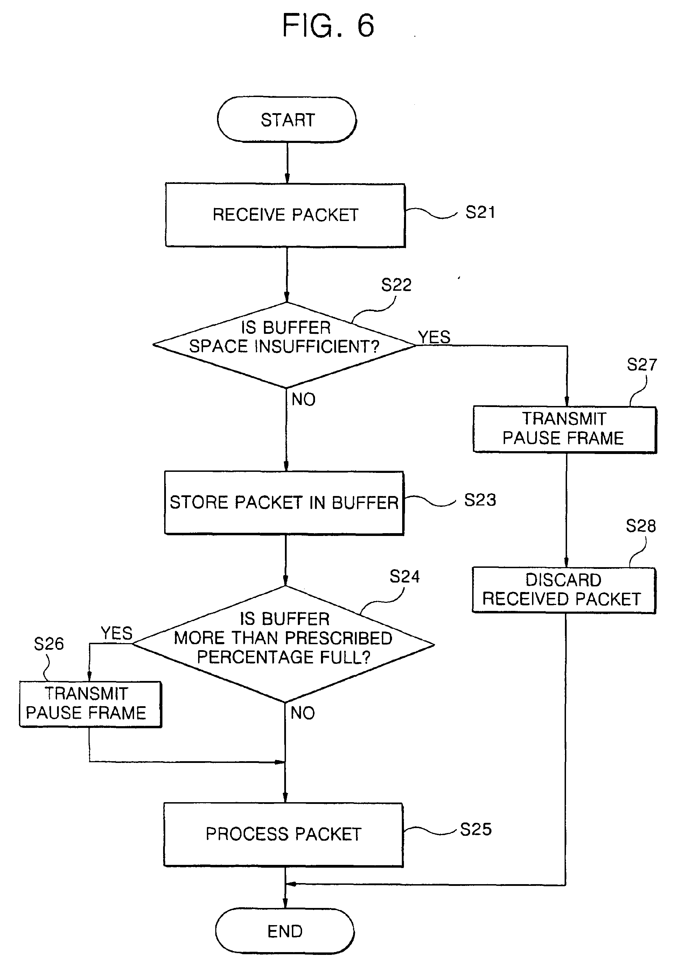

A packet flow control method of a WLAN system applied when an external network has a slower transmission rate than an internal network is described below in detail with reference to FIG. 6.

FIG. 6 is a flowchart of a packet flow control method of an AP according to an exemplary embodiment of the present invention.

As shown in FIG. 6, the AP 10 receives a packet from the WLAN terminal 20 (S21).

The AP 10 then analyzes the destination address of the received packet and transmits the received packet to the internal network when the destination address is in the internal network.

However, when the destination address of the received packet is in the external network, the AP 10 determines whether the buffer for storing the received packet is saturated (S22).

When the buffer is determined not to be saturated, the AP 10 stores the received packet in the buffer (S23).

Then, the access packet 10 determines whether the buffer is more than a prescribed percentage full (S24).

When the buffer is not more than the prescribed percentage full, the AP 10 analyzes the stored packet and transmits it to the external network (S25).

However, when the buffer is more than the prescribed percentage full, the AP 10 transmits the pause frame to the WLAN terminal 20 (S26) and processes the packet stored in the buffer.

When the buffer is determined to be saturated, the AP 10 transmits the pause frame to the WLAN terminal 20 (S27).

Then, the AP 10 discards the received packet (S28).

The AP 10 determines whether the buffer is saturated in the method described above and transmits the pause frame when the buffer is saturated, thereby controlling packet transmission of the WLAN terminal 20.

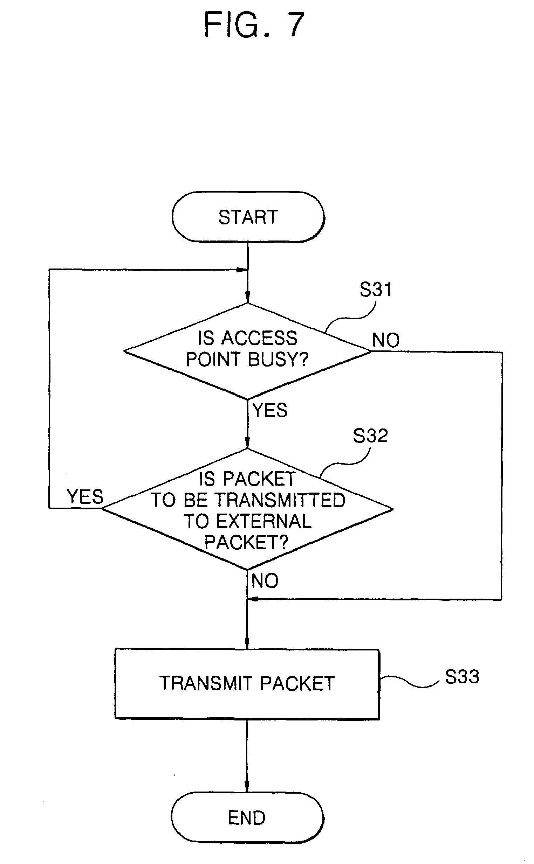

FIG. 7 is a flowchart of a packet flow control method of a WLAN terminal according to an exemplary embodiment of the present invention.

In FIG. 7, it is assumed that the WLAN terminal 20 has received the pause frame from the AP 10.

As shown in FIG. 7, before transmitting the packet, the WLAN terminal 20 checks whether or not the count to the pause time contained in the pause frame is finished to determine a status of the AP 10 (S31).

When the count to the pause time is not finished, the AP 10 is determined to be busy and the WLAN terminal 20 determines whether or not the packet to be transmitted is to be transmitted to the external network (S23).

When the packet is to be transmitted to the external network, the WLAN terminal 20 pauses packet transmission until the count to the pause time is finished. However, when the packet is to be transmitted to the internal network, the WLAN terminal 20 transmits the packet to the internal network (S33).

When the count to the pause time is finished and so the AP 10 is determined not to be busy, the WLAN terminal 20 transmits the corresponding packet to the AP 10 (S33).

As described above, the packet flow control method and apparatus in the WLAN system according to the present invention controls packet flow of the WLAN using the pause frame depending on whether the buffer of the AP is saturated, thereby preventing packet loss and channel dissipation and improving the efficiency with which resources of the WLAN are utilized.

While the present invention has been described with reference to exemplary embodiments thereof, it will be understood by those skilled in the art that various modifications in form and detail can be made therein without departing from the scope of the present invention as defined by the following claims.

## Claims

1. An Access Point (AP) to control packet flow in a Wireless Local Area Network (WLAN), comprising:
a controller adapted to receive a packet from a WLAN terminal constituting an internal network, to determine whether a buffer is saturated upon a packet being received from a WLAN terminal, and to transmit a pause frame to the WLAN terminal upon the buffer being saturated.

2. The Access Point (AP) of claim 1, wherein the pause frame comprises information to request packet transmission to be paused and a pause time indicating a packet transmission pause time period.

3. The Access Point (AP) of claim 1, wherein the controller is adapted to transmit the pause frame and to discard the received packet.

4. The Access Point (AP) of claim 1, wherein the controller is adapted to store the received packet in the buffer upon the buffer not being saturated, to determine whether the buffer is more than a prescribed percentage full, and to transmit the pause frame to the WLAN terminal upon the buffer being more than the prescribed percentage full.

5. The Access Point (AP) of claim 1, wherein the controller is adapted to analyze a destination address of a packet received from the WLAN terminal upon an external network having a slower transmission rate than the internal network, to transmit the packet to the internal network upon the destination address of the packet being in the internal network, and to determine whether the buffer is saturated upon the destination address of the packet being in the external network.

6. A Wireless Local Area Network (WLAN) terminal to control packet flow in a WLAN system, the WLAN comprising:
a controller adapted to receive a pause frame containing a pause time from an Access Point (AP), to analyze the pause frame to count to the pause time, to pause packet transmission to the AP during the count to the pause time, and to recommence the packet transmission to the AP upon the count to the pause time being finished.

7. The WLAN terminal of claim 6, wherein the pause frame comprises information to request packet transmission to be paused.

8. The WLAN terminal of claim 6, further comprising a storage unit adapted to store information contained in the pause frame.

9. The WLAN terminal of claim 6, wherein the controller is adapted to transmit a packet, whose destination is in an internal network, to the AP during the count to the pause time, to pause transmission of the packet upon the pause frame being received from the AP during transmission of the packet, and to continue transmitting the packet upon the pause frame not being received.

10. A Wireless Local Area Network (WLAN) system to control packet flow, the WLAN comprising:
an Access Point (AP) adapted to determine whether a buffer is saturated upon a packet being received from an internal network and to transmit a pause frame containing a pause time to the internal network upon the buffer being saturated; and
a WLAN terminal adapted to exchange packets with the AP, to receive the pause frame from the AP to analyze the pause frame and count to the pause time, to pause packet transmission to the AP during the count to the pause time, and to recommence the packet transmission to the AP upon the count to the pause time being finished.

11. The WLAN system of claim 10, wherein the pause frame comprises information to request packet transmission to be paused.

12. The WLAN system of claim 10, wherein the pause frame further comprises a destination address to which the WLAN terminal is to transmit the packet.

13. The WLAN system of claim 10, wherein the AP is adapted to transmit the pause frame and to discard the received packet.

14. The WLAN system of claim 10, wherein the AP is adapted to store the received packet in the buffer upon the buffer not being saturated, to determine whether the buffer is more than a prescribed percentage full, and to transmit the pause frame to the internal network upon the buffer being more than the prescribed percentage full.

15. The WLAN system of claim 10, wherein the AP is adapted to analyze a destination address of a packet received from the WLAN terminal upon an external network having a slower transmission rate than the internal network, to transmit the packet to the internal network upon the destination address of the packet being in the internal network, and to determine whether the buffer is saturated upon the destination address of the packet being in the external network.

16. The WLAN system of claim 10, wherein the WLAN terminal is adapted to transmit a packet, whose destination is in an internal network, to the AP during the count to the pause time, to pause transmission of the packet upon the pause frame being received from the AP during transmission of the packet, and to continue transmitting the packet upon the pause frame not being received.

17. A packet flow control method of an Access Point (AP) in a Wireless Local Area Network (WLAN), the method comprising:
determining whether a buffer is saturated upon a packet being received from a WLAN terminal;
transmitting a pause frame to the WLAN terminal and discarding the received packet upon the buffer being saturated; and
storing the received packet in the buffer upon the buffer not being saturated.

18. The method of claim 17, wherein the pause frame comprises information to request that packet transmission to be paused and a pause time to indicate a packet transmission pause time period.

19. The method of claim 17, further comprising determining whether the buffer is more than a prescribed percentage full upon the packet being stored in the buffer, and transmitting the pause frame to the WLAN terminal upon the buffer being more than the prescribed percentage full.

20. The method of claim 17, further comprising analyzing a destination address of a packet received from the WLAN terminal upon an external network having a slower transmission rate than an internal network, transmitting the packet to the internal network upon the destination address of the packet being in the internal network, and determining whether the buffer is saturated upon the destination address of the packet being in the external network.

21. A packet flow control method of a Wireless Local Area Network (WLAN) terminal in a WLAN system, the method comprising:
receiving a pause frame containing a pause time from an Access Point (AP);
analyzing the pause frame to count to the pause time; and
transmitting the packet to the AP upon the count to the pause time being finished.

22. The method of claim 21, wherein the pause frame comprises information to request that packet transmission be paused.

23. The method of claim 21, further comprising transmitting a packet, whose destination is in an internal network, to the AP during the count to the pause time, pausing transmission of the packet upon the pause frame being received from the AP during transmission of the packet, and continuing to transmit the packet upon the pause frame not being received.
